# EUROPÄISCHE PATENTSCHRIFT

(11) **EP 1 710 453 B1**
(45) Veröffentlichungstag und Bekanntmachung des Hinweises auf die Patenterteilung: **07.05.2008**
(21) Anmeldenummer: 06007374.9
(22) Anmeldetag: 07.04.2006
(51) Int. Cl.: F16B 25/00, F16B 25/10, F16B 43/00, F16B 13/14, F16B 35/04

(54) **Befestigungs-Anker**
Anchoring bar
Barre d'ancrage

(30) Priorität: 08.04.2005 DE 102005016097
(43) Veröffentlichungstag der Anmeldung: 11.10.2006
(73) Patentinhaber: TOGE-Dübel A. Gerhard KG, 90431 Nürnberg (DE)
(72) Erfinder: Gerhard, Toni, 90768 Fürth (DE)
(74) Vertreter: Rau, Albrecht

(56) Entgegenhaltungen:
- EP-A- 0 947 713
- EP-A- 0 955 476
- EP-A- 1 428 937
- DE-A1- 19 846 993
- US-A- 1 126 531
- US-A- 3 897 713

## Beschreibung

Die Erfindung betrifft einen Befestigungs-Anker zum Einschrauben in ein Bohrloch in einem porösen Werkstoff, insbesondere Asphalt oder Beton, gemäß dem Oberbegriff des Anspruches 1.

Seit einiger Zeit werden mit einem selbstschneidenden Gewinde versehene Betonanker verwendet, die direkt in ein Betonloch eingeschraubt werden. Diese weisen an ihrem äußeren Ende ein Befestigungs-Gewinde auf, auf das normalerweise eine Mutter aufgeschraubt, eine Unterlegscheibe aufgeschoben, der zu befestigende Gegenstand aufgeschoben, eine weitere Unterlegscheibe aufgeschoben sowie eine weitere Mutter aufgeschraubt werden. Diese Anordnung wird gewählt, damit der Betonanker beim Festziehen der oberen Mutter nicht Zugkräften gegenüber dem Untergrund ausgesetzt wird. Dieser negative Effekt träte auf, wenn der Gegenstand sich direkt gegenüber dem Untergrund abstützen würde. Die geschilderte Lösung führt dann zu einer relativ großen Gesamtbauhöhe.

Aus der DE 198 46 993 A1 ist eine selbstschneidende Betonschraube bekannt, die einen Kern mit einem darauf aufgebrachten selbstschneidenden Gewinde aufweist. Im Bereich ihres Kopfes weist die Schraube ein Außen-gewinde mit einer aufgeschobenen Unterleg-Scheibe auf. Nachteilig an dieser Anordnung ist, dass bei der Befestigung eines äußeren Gegenstandes an dem Befestigungs-Anker unerwünschte Zugkräfte auf den Untergrund wirken.

Der Erfindung liegt die Aufgabe zugrunde, einen Befestigungs-Anker zu schaffen, der die Nachteile des Standes der Technik überwindet.

Die Aufgabe wird gelöst durch die Merkmale des kennzeichnenden Teils des Anspruchs 1. Der Kern der Erfindung besteht darin, auf einen Befestigungs-Anker eine Scheibe aufzuschrauben und gegenüber dem Anker festzulegen.

Weitere vorteilhafte Ausgestaltungen der Erfindung ergeben sich aus den Unteransprüchen.

Zusätzliche Merkmale und Einzelheiten der Erfindung ergeben sich aus der Beschreibung eines Ausführungsbeispiels anhand der Zeichnung. Es zeigt:

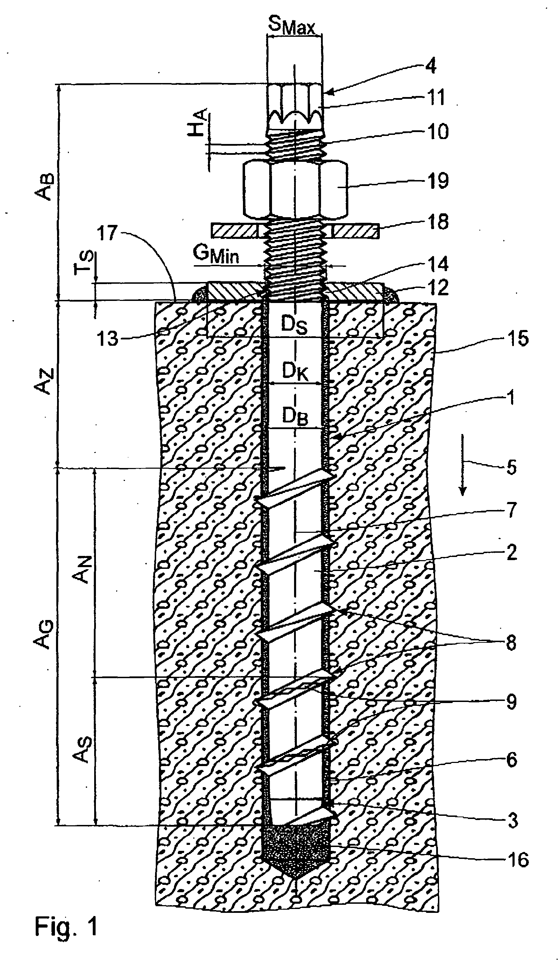

Fig. 1 einen Längsschnitt eines erfindungsgemäßen Befestigungs-Ankers.

Ein Befestigungs-Anker 1 ist zum Einschrauben in einen porösen Werkstoff, insbesondere Asphalt oder Beton, bestimmt und hinsichtlich des Materials entsprechend dimensioniert. Als Material kann je nach den Erfordernissen normaler Stahl, kohlenstoffhaltiger Stahl oder Edelstahl verwendet werden. Dies hängt vor allem auch von der geforderten Korrosionsresistenz des Ankers 1 ab. Der Anker 1 weist einen im Wesentlichen zylindrischen Kern 2 mit einem Einführende 3, einem diesem gegenüberliegenden Außenende 4, einer Einschraub-Richtung 5, einem Außenumfang 6 und einer parallel zur Richtung 5 verlaufenden Mittel-Längs-Achse 7 auf. Einstückig mit dem Kern 2 ist ein Außen-Gewinde 8 ausgebildet, das sich vom Einführende 3 entgegen der Richtung 5 entlang eines Gewinde-Abschnitts A_{G} erstreckt. Das Gewinde 8 ist entlang eines sich vom Einführende 3 entgegen der Richtung 5 erstreckenden Schneid-Abschnitts A_{S} selbstschneidend und weist hierfür im Gewinde 8 Schneid-Elemente 9 auf. An den Schneid-Abschnitt A_{S} schließt sich ein Normalgewinde-Abschnitt AN an, wobei gilt A _{S}+ AN = A_{G}. Es ist auch möglich, dass das Gewinde 8 keine Schneid-Elemente 9 aufweist. An den Gewinde-Abschnitt A_{G} schließt sich ein zylindrischer Zylinder-Abschnitt A_{Z} an, der eine im wesentlichen glatte Oberfläche aufweist. Das Gewinde 8 ist so dimensioniert und gestaltet, dass es in einen porösen Werkstoff, wie z. B. Stahl oder Asphalt, eingeschraubt werden kann.

An den Zylinder-Abschnitt A_{Z} schließt sich ein Befestigungs-Gewinde-Abschnitt A_{B} an. Dieser weist ein als normales Metallgewinde ausgebildetes Befestigungs-Gewinde 10 auf In Richtung 5 vor dem Befestigungs-Gewinde 10 befindet sich im Bereich des Außenendes 4 ein Mehrkant-Kopf 11, insbesondere ein Sechskantkopf. Dieser weist einen maximalen Außendurchmesser S_{Max} auf, der kleiner ist als der minimale Durchmesser G_{Min} des Befestigungs-Gewindes 10. Dies bedeutet, dass eine Mutter über den Mehrkant-Kopf 11 geschoben werden kann, um anschließend auf das Befestigungs-Gewinde 10 geschraubt zu werden.

Der Befestigungs-Anker 1 weist eine Scheibe 12 mit einer mittigen Bohrung 13 auf, wobei in der Bohrung 13 ein Scheiben-Gewinde 14 angeordnet ist, das zu dem Befestigungs-Gewinde 10 passt. Die Scheibe 12 ist auf das Befestigungs-Gewinde 10 bis zu dessen in Richtung 5 liegenden Ende aufgeschraubt und festgelegt. Es ist darüber hinaus möglich, die Position der Scheibe 12 auf dem Gewinde 10 durch einen speziellen, zur Verbindung von Metall geeigneten Klebstoff zu verbinden. Die Scheibe 12 weist einen Außendurchmesser D_{S} auf. Der Kern 2 weist einen Außendurchmesser D_{K} auf. Für das Verhältnis der Durchmesser gilt: D_{S}/D_{K}≥ 2,0, insbesondere ≥ 2,5, insbesondere ≥ 3,0, insbesondere ≥ 3,5, insbesondere ≥ 4,5. Es ist insofern wichtig, dass die Scheibe 12 ausreichend über den Kern 2 in radialer Richtung hervorsteht. Es ist ferner wichtig, dass die Scheibe eine Dicke T_{S} besitzt, die so gewählt ist, dass das Scheiben-Gewinde 14 lang genug ist und eine Stabilisierung der Scheibe 12 auf dem Kern 2 gewährleistet. Insofern sollte die Scheibe 12 eine Dicke T_{S} besitzen, die mindestens der einfachen Ganghöhe H_{A} des Befestigungs-Gewindes 10 entspricht. Besser ist eine Dicke T_{S}, die das Doppelte oder Dreifache der Ganghöhe H_{A} beträgt. Die Scheibe 12 besitzt eine ringzylindrische Form mit einem im Querschnitt kreisförmigen Rand. Für das Verhältnis der Außendurchmessers der Scheibe D_{S} zur Dicke der Scheibe T_{S} gilt beispielsweise, dass dieses ungefähr gleich 10 ist.

Im Folgenden wird die Anordnung des Ankers 1 beispielsweise in Beton oder Asphalt beschrieben. In einem Werkstoff 15, der insbesondere Beton oder Asphalt ist, wird ein im Wesentlichen zylindrisches Bohrloch 16 eingebracht. Das Bohren kann mittels eines Elektro-Bohr-Hammers erfolgen. Das Bohrloch 16 hat einen Durchmesser D_{B}, der geringfügig größer ist als der Kern-Durchmesser D_{K}, jedoch kleiner als der Außendurchmesser des Außen-Gewindes 8. In das Bohrloch 16 wird gegebenenfalls eine selbstaushärtende Verbundmasse eingerollt, die in der Regel aus styrolfreiem Phenylesther oder dergleichen und Härter besteht. Es ist auch möglich, ohne eine entsprechende Verbundmasse zu arbeiten. Im Anschluss daran wird ein Schlagschrauber auf den Mehrkant-Kopf 11 gesetzt und der Anker 1 in das Bohrloch 16 eingeschraubt, wobei sich das Gewinde 8 in die Wand des Bohrloches 16 schneidet. Das Einschrauben erfolgt soweit, bis die Scheibe 12 auf dem Rand 17 des Bohrloches 16 zu liegen kommt. Dies ist bereits ein erster Vorteil des erfindungsgemäßen Ankers 1. Durch die fixierte Scheibe 12 wird erreicht, dass der Anker 1 genau in eine vorbestimmte Tiefe eingeschraubt wird und nicht zu weit eingeschraubt wird oder zu weit hervorsteht. Anschließend wird ein zu befestigender Gegenstand auf das Gewinde 10 aufgeschoben, eine weitere Beilagscheibe 18 über das Gewinde 10 geschoben und anschließend eine Mutter 19, die zu dem Befestigungs-Gewinde 10 passt, aufgeschraubt und festgezogen.

Die erfindungsgemäße Anordnung des Ankers 1 besitzt den Vorteil, dass die Befestigung eines Gegenstandes an dem Anker 1 zu keinen dauerhaften Spannungen zwischen dem Anker 1 und dem Werkstoff 15 führen. Dies wäre besonders bei Asphalt, der vor allem bei wärmeren Temperaturen fließfähig wird, nachteilhaft. Vielmehr wird der zu befestigende Gegenstand zwischen der Scheibe 12 und der Mutter 19 fixiert und nicht, wie bei einer normalen Schraube, zwischen dem oberen Rand des Werkstoffs und dem Schraubenkopf. Die fixierte Scheibe 12 erhöht die Querstabilität des Ankers 1, die insbesondere in Asphalt von Bedeutung ist. Sie verhindert, dass bei von außen auf den Anker 1 wirkenden Querkräften diese gegenüber der Vertikalen gekippt werden kann. Durch die Scheibe 12 wird ferner ein Einsinken des Ankers 1 in Asphalt bei höheren Temperaturen verhindert. Die Scheibe 12 hat ferner den Vorteil, dass, wenn mit Verbundmasse gearbeitet wird, Verbundmasse, die über den Rand 17 des Bohrloches 16 hinausgedrückt wird, in radialer Richtung nach außen umgelenkt wird und die Scheibe 12 mit der Oberfläche des Werkstoffs 15 verklebt, wodurch das Bohrloch 16 z. B. gegen Feuchtigkeit versiegelt wird.

## Patentansprüche

1. Befestigungs-Anker zum Einschrauben in ein Bohrloch (16) in einem porösen Werkstoff (15), insbesondere Asphalt oder Beton, umfassend
a. einen zylindrischen Kern (2) mit
i. einem Einführende (3),
ii. einem diesem gegenüberliegenden Außenende (4),
iii. einer Einschraub-Richtung (5) und
iv. einer dazu parallelen Mittel-Längs-Achse (7),
b. ein einstückig mit dem Kern (2) ausgebildetes, sich vom Einführende (3) entgegen der Einschraub-Richtung (5) entlang eines Außen-Gewinde-Abschnitts (A_{G}) erstreckendes Außen-Gewinde (8) zum Einschrauben desselben in den Werkstoff (15), und
c. ein einstückig mit dem Kern (2) ausgebildetes, in Einschraub-Richtung (5) vor dem Außen-Gewinde (8) angeordnetes, sich entlang eines Befestigungs-Gewinde-Abschnitts (A_{B}) erstreckendes Befestigungs-Gewinde (10) zur Befestigung von Gegenständen an dem Befestigungs-Anker (1), **dadurch gekennzeichnet, dass**
d. mindestens eine auf das Befestigungs-Gewinde (10) aufgeschraubte, in radialer Richtung gegenüber dem Kern (2) hervorstehende Scheibe (12)vorgesehen ist.

2. Befestigungs-Anker gemäß Anspruch 1, **dadurch gekennzeichnet, dass** die mindestens eine Scheibe (12) am in Einschraub-Richtung (5) liegenden Ende des Befestigungs-Gewindes (10) festgelegt ist.

3. Befestigungs-Anker gemäß Anspruch 1 oder 2, **dadurch gekennzeichnet, dass** die Scheibe (12) eine Bohrung (13) mit einem Scheiben-Innen-Gewinde (14) aufweist, das zu dem Befestigungs-Gewinde (10) passt.

4. Befestigungs-Anker gemäß einem der vorangehenden Ansprüche, **dadurch gekennzeichnet, dass** die Scheibe (12) einen Außendurchmesser (D_{S}) aufweist, der Kern (2) einen Außendurchmesser (D_{K}) aufweist und für das Verhältnis D_{S}/D_{K} gilt: D_{S}/D_{K} ≥ 2,0, insbesondere ≥ 2,5, insbesondere ≥ 3,0, insbesondere ≥ 3,5.

5. Befestigungs-Anker gemäß einem der vorangehenden Ansprüche, **dadurch gekennzeichnet, dass** das Außen-Gewinde (8) eine Ganghöhe (H_{A}) besitzt und die Scheibe (12) eine Dicke (T_{S}) besitzt, wobei gilt: T_{S} ≥ H_{A}.

6. Befestigungs-Anker gemäß einem der vorangehenden Ansprüche, **dadurch gekennzeichnet, dass** im Bereich des Außenendes (4) ein Drehmoment-Übertragungs-Mittel zur Übertragung eines Einschraub-Drehmoments von einem Einschraub-Werkzeug auf den Kern (2) zum Einschrauben desselben in den Werkstoff (15) vorgesehen ist.

7. Befestigungs-Anker gemäß Anspruch 6, **dadurch gekennzeichnet, dass** das Drehmoment-Übertragungs-Mittel als Außen-Mehrkant ausgebildet ist.

8. Befestigungs-Anker gemäß einem der Ansprüche 6 oder 7, **dadurch gekennzeichnet, dass** das Befestigungs-Gewinde (10) einen minimalen Durchmesser (G_{Min}) aufweist und das Drehmoment-Übertragungs-Mittel einen maximalen Außendurchmesser (S_{Max}) aufweist, so dass gilt: S_{Max} ≤ G_{Min}.

9. Befestigungs-Anker gemäß einem der vorangehenden Ansprüche, **dadurch gekennzeichnet, dass** das Außen-Gewinde (8) entlang eines Schneid-Gewinde-Abschnitts (A_{S}) als Schneid-Gewinde mit SchneidElementen (9) ausgebildet ist.

10. Befestigungs-Anordnung mit
a) einem Grundkörper aus einem Werkstoff (15),
b) einem in dem Grundkörper angeordneten Bohrloch (16),
c) einem in das Bohrloch (15) eingeschraubten Befestigungs-Anker gemäß einem der Ansprüche 1 bis 9, und
d) einer den Bereich zwischen dem Befestigungs-Anker und der Wand des Bohrloches (16) ausfüllenden, ausgehärteten Verbundmasse.

## Claims

1. Anchoring bar which is screwable into a drill hole (16) in a porous material (15), in particular asphalt or concrete, comprising
a. a cylindrical core (2) comprising
i. an insert end (3);
ii. an outer end (4) opposite thereto;
iii. a direction of screwing (5); and
iv. a central longitudinal axis (7) parallel thereto;
b. an external thread (8) for screwing into the material (15), said external thread (8) being integral with the core (2) and extending from the insert end (3) in a direction opposite to the direction of screwing (5) and along an external thread portion (A_{G}); and
c. a mounting thread (10) for mounting objects to the anchoring bar (1), the mounting thread (10) being integral with the core (2), being disposed in front of the external thread (8) when seen in the direction of screwing (5), and extending along a mounting thread portion (A_{B}), **characterized in that**
d. at least one disk (12) is provided which is screwed on the mounting thread (10) and protrudes beyond the core (2) in a radial direction.

2. Anchoring bar according to claim 1, **characterized in that** the at least one disk (12) is fastened to the end of the mounting thread (10) that is disposed in the direction of screwing (5).

3. Anchoring bar according to claim 1 or 2, **characterized in that** the disk (12) has a bore (13) with an internal disk thread (14) which is suited to the mounting thread (10).

4. Anchoring bar according to one of the preceding claims, **characterized in that** the disk (12) has an external diameter (D_{S}) and the core (2) has an external diameter (D_{K}), wherein the following applies to the D_{S}/D_{K} ratio: D_{S}/D_{K} ≥ 2.0, in particular ≥ 2.5, in particular ≥ 3.0, in particular ≥ 3.5.

5. Anchoring bar according to one of the preceding claims, **characterized in that** the external thread (8) has a flight height (H_{A}) and the disk (12) has a thickness (T_{S}), wherein the following applies: T_{S} ≥ H_{A}.

6. Anchoring bar according to one of the preceding claims, **characterized in that** a torque transmission means is provided in the vicinity of the outer end (4) for transmitting a screwing torque from a screwing tool to the core (2) for screwing said core (2) into the material (15).

7. Anchoring bar according to claim 6, **characterized in that** the torque transmission means is an external polygon.

8. Anchoring bar according to one of the claims 6 or 7, **characterized in that** the mounting thread (10) has a minimum diameter (G_{Min}) and the torque transmission means has a maximum diameter (S_{Max}) so that the following applies: S_{Max} ≤ G_{Min}.

9. Anchoring bar according to one of the preceding claims, **characterized in that** the external thread (8) is a cutting thread with cutting elements (9) along a cutting thread portion (A_{S}).

10. Anchoring arrangement comprising
a) a base body of a material (15);
b) a drill hole (16) disposed in the base body;
c) an anchoring bar according to one of the claims 1 to 9 screwed into the drill hole (15); and
d) a hardened compound mass filling the gap between the anchoring bar and the wall of the drill hole (16).

## Revendications

1. Barre d'ancrage pour visser dans une perforation (16) réalisée dans un matériau poreux (15), en particulier dans l'asphalte ou le béton, comportant
a. un noyau cylindrique (2) avec
i. une extrémité d'insertion (3)
ii. une extrémité externe (4) opposée à cette dernière
iii. un sens de vissage (5) et
iv. un axe longitudinal central (7) parallèle à celui-ci,
b. un filetage externe (8) formant un monobloc avec le noyau (2), s'étirant à partir de l'extrémité d'insertion (3), à contre sens du sens de vissage (5), le long d'une section de filetage externe (A_{G}), lequel sert à visser celui-ci dans la matériau (15) et
c. un filetage d'ancrage (10), formant un monobloc avec le noyau (2), disposé dans le sens de vissage (5) devant le filetage externe (8), et s'étirant le long d'une section de filetage d'ancrage (A_{B}), lequel sert à fixer des objets sur la barre d'ancrage (1), **caractérisée en ce que**
d. au moins une rondelle (12), vissée sur le filetage d'ancrage (10), saillante dans le sens radial, devant le noyau (2), est prévue.

2. Barre d'ancrage selon la revendication 1, **caractérisée en ce que** la rondelle (12), au moins au nombre de une, est fixée à l'extrémité du filetage d'ancrage (10) située dans le sens de vissage (5).

3. Barre d'ancrage selon la revendication 1 ou 2, **caractérisée en ce que** la rondelle (12) présente une perforation (13) avec un filetage interne de rondelle (14), lequel s'adapte au filetage d'ancrage (10).

4. Barre d'ancrage selon l'une des revendications précédentes, **caractérisée en ce que** la rondelle (12) présente un diamètre externe (D_{S}), le noyau présente un diamètre externe (D_{K}) et que pour le rapport D_{S}/D_{K}, on a : D_{S}/D_{K} ≥ 2, 0, en particulier ≥ 2,5, en particulier ≥ 3,0, en particulier ≥ 3,5.

5. Barre d'ancrage selon l'une des revendications précédentes, **caractérisée en ce que** le filetage externe (8) possède une hauteur d'entrée (H_{A}) et la rondelle (12) une épaisseur (T_{S}) , où on a : T_{S} ≥ H_{A}.

6. Barre d'ancrage selon l'une des revendications précédentes, **caractérisée en ce que** au niveau de l'extrémité externe (4), est prévu un moyen de transfert de couple, servant au transfert du couple de vissage d'un outil de vissage sur le noyau (2) pour le vissage de celui-ci dans le matériau (15).

7. Barre d'ancrage selon la revendication 6, **caractérisée en ce que** le moyen de transfert de couple est conçu en polygone externe.

8. Barre d'ancrage selon l'une des revendications 6 ou 7, **caractérisée en ce que** le filetage d'ancrage (10) présente un diamètre (G_{Min}) minimal et le moyen de transfert de couple, un diamètre externe (S_{Max}) maximal, de sorte que l'on a : S_{Max} ≤ G_{Min}.

9. Barre d'ancrage selon l'une des revendications précédentes, **caractérisée en ce que** le filetage externe (8) est conçu comme un filetage tranchant avec des éléments tranchants (9), le long d'une section de filetage tranchant (A_{S}).

10. Disposition d'ancrage avec
a) un corps de base constitué par un matériau (15)
b) une perforation (16) réalisée dans le corps de base
c) une barre d'ancrage vissée dans la perforation (15), conformément à l'une des revendications 1 à 9, et
d) une masse composite durcie remplissant et la zone entre la barre d'ancrage et le mur de la perforation (16).
